# EUROPEAN PATENT SPECIFICATION

(11) **EP 1 506 882 B1**
(45) Date of publication and mention of the grant of the patent: **09.07.2008**
(21) Application number: 03425547.1
(22) Date of filing: 11.08.2003
(51) Int. Cl.: B60B 21/06, B60B 5/02

(54) **Composite bicycle rim and method for producing it**
Fahrradfelge aus Verbundwerkstoff und Verfahren zu ihrer Herstellung
Jante composite de bicyclette et procédé de sa fabrication

(43) Date of publication of application: 16.02.2005
(73) Proprietor: Campagnolo S.r.l., 36100 Vicenza (VI) (IT)
(72) Inventor: Meggiolan, Mario, 36051 Creazzo (Vicenza) (IT); Passarotto, Maurizio, 45100 Rovigo (IT)
(74) Representative: Riccardi, Elisa

(56) References cited:
- EP-A- 0 324 630
- EP-A- 1 231 077
- DE-A- 4 425 592
- RU-C- 2 096 188
- US-A- 4 146 274
- US-A- 4 614 678
- US-A- 6 086 161
- PATENT ABSTRACTS OF JAPAN vol. 009, no. 223 (M-411), 10 September 1985 (1985-09-10) & JP 60 080902 A (MITSUBISHI RAYON KK), 8 May 1985 (1985-05-08)

## Description

The present invention concerns a bicycle rim made of composite material based on structural fibres incorporated in a polymeric material, as well as a method for producing such a rim.

Bicycle rims shaped with a single channel, at the side walls or wings of which the beads of the tyre are coupled through protruding lips of the wings, and on the bottom of which a plurality of holes are made for the attachment of respective spokes, are known.

In order to increase the structural stiffness and to reduce the deformability from side loads, bicycle rims the cross-section of which defines a radially outer circumferential channel for tyre coupling and an essentially hollow, radially inner circumferential body region are also known. The tyre coupling channel and the body region are separated by a wall indicated in the field and hereafter as "upper bridge".

Whilst the channel is subjected to standards or shape and tolerance restrictions in view of its coupling with the tyre, the radially inner region can have the most various configurations, provided that it offers a suitable clamping surface for the spokes and provided that the conflicting requirements of sufficient structural stiffness and low weight are adequately satisfied.

Typical configurations of a bicycle rim of this second known type, to which the present invention refers, include an inverted A-shaped cross-section, i.e. where the radially inner body region is formed of a single chamber, defined by the upper bridge, by two side walls and by a radially inner circumferential wall also called "lower bridge". The chamber can have an essentially rectangular cross-section, i.e. wherein the side walls are substantially parallel to the middle plane of the rim, an essentially trapezoidal cross-section that is symmetrical with respect to the middle plane of the rim, i.e. wherein the side walls are oblique, or else an essentially asymmetrical trapezoidal cross-section, i.e. wherein a first side wall substantially extends in a plane parallel to the middle plane of the rim and a second wall extends obliquely. In other configurations, typical above all of rims obtained by extrusion and calendering, but that can also be made of structural fibre-based composite material, the radially inner region is provided with one or more partition walls, extending substantially parallel to the upper bridge or substantially transversal to it, so as to define two or more circumferential chambers.

EP 1 231 077 describes a method for producing a bicycle rim, and such a rim, of the type which has an inner peripheral wall, an outer peripheral wall, two side walls connecting them, and two circumferential wings for anchoring a tyre extending outwards from the two sides of the peripheral outer wall. The manufacturing method comprises the steps of: applying onto the inner part of a mould a certain number of layers of plies of structural fibres incorporated in a plastic material matrix, intended to form the inner wall, the outer wall, the two side walls and the wings; arranging an inflatable bag over the layers; folding a first number of layers over the inflatable bag; applying at least one core over the folded layers; folding a second number of layers over the core; applying the outer part of the mould to enclose the layers; inflating the inflatable bag to press the layers against the mould; increasing the temperature of the mould to a value sufficient for the reticulation of the plastic material matrix; removing the rim from the mould and removing the core, obtaining a single-piece rim made of a structural fibre material. Apart from first additional layers that may be applied to increase the thickness of the outer wall and/or of the two wings, it is provided that second additional layers may be applied to fill the side regions of the outer wall from which said wings depart, said second additional layers being, in particular, folded or wound plies of structural fibres.

The Applicant has experimentally found that, in a rim of the type described in EP 1 231 077, the intersection regions among the upper bridge, the side walls and the wings are subjected to breaking following the application of a certain stress onto the wings themselves, in particular in the tyre burst test. Analogous breaking should therefore be expected in the case of impacts onto the rim, as caused for example by stones, falling and the like during the use of a bicycle equipped with such a rim, as well as between other walls of the rim in the case of rims made by an analogous process, but having a body region with a more complex cross-section, for example with many circumferential chambers.

RU 2 096 188 C1 discloses a bicycle wheel comprising long-fiber reinforcing filler and polymerized binder. Spaces between profile edges and corresponding partitions are filled with low-density resilient material.

The technical problem at the basis of the present invention is that of avoiding such a drawback of the prior art, improving the overall strength to stresses, in particular to stresses substantially in the axial direction, of the bicycle rim in general and of the intersection zone among the upper bridge, the side walls and the wings in particular.

In accordance with the invention, such a technical problem is solved by providing a reinforcement element at the intersection zone between walls of the rim, in particular between the upper bridge, one or each side wall and respectively one or each wing, said reinforcement element comprising unidirectional structural fibres extending in the circumferential direction. The unidirectional structural fibres fulfil the double role of filling the space between adjacent layers in the intersection zone between walls, in a much more effective way with respect to the solution proposed by EP 1 231 077, and of increasing the strength to stresses of the intersection zone, by distributing them along the entire circumference of the rim thanks to the directionality of the unidirectional structural fibres themselves.

In a first aspect thereof, the present invention concerns a bicycle rim made of composite material based on structural fibres incorporated in a polymeric material, comprising at least one circumferential reinforcement element of unidirectional structural fibres extending at a respective intersection of walls of the rim, the direction of the structural fibres being circumferential and the unidirectional structural fibres being substantially embedded, in the finished bicycle rim, in a gluing substance.

Such a gluing substance beneficially contributes to the filling of the intersection zone and thus to the strength of the rim.

Preferably, the gluing substance has a high elongation at break coefficient, higher than that of the polymeric material.

The gluing substance in such a way contributes to grant strength to the rim since it absorbs the torsional and compression stresses created between/among the walls of the rim and due, for example, to impacts.

Preferably, the gluing substance has an intralaminar shear strength higher than that of the polymeric material.

Without wishing to be bound to any theory, the Applicant believes, indeed, that the stress of the wings and the consequent spreading apart and deformation thereof cause the reciprocal sliding of the plies of composite material of the adjacent layers which typically make up the wings, as better described hereinbelow, a sliding which in turn determines the cracking of the polymeric material of the plies themselves. Reciprocal sliding and consequent cracking analogously occur at intersection points between/among walls other than the wings of the tyre coupling channel. The provision of a gluing substance having a high intralaminar shear strength would hinder the reciprocal sliding of the adjacent plies of layers.

The unidirectional structural fibres of said circumferential reinforcement element can be dry fibres, but preferably they are incorporated in a polymeric material.

The polymeric material embedding the structural fibres, both as far as the walls of the rim are concerned and as far as the circumferential reinforcement element are concerned, can be thermoplastic or thermosetting.

More precisely, the polymeric material is preferably a thermosetting resin.

Advantageously, the polymeric material in which the unidirectional structural fibres of the circumferential reinforcement element are incorporated has the same composition of the polymeric material in which structural fibres of the walls of the rim are incorporated, so as to require the same heating profile, namely the same ranges of time and temperature for reticulation - in the case of thermosetting polymeric material - or for curing - in the case of thermoplastic polymeric material - during the moulding cycle.

Preferably, the weight ratio between the polymeric material and the structural fibres of the at least one circumferential reinforcement element is substantially equal to or slightly lower than the weight ratio between the polymeric material and the structural fibres of the walls of the rim.

Advantageously, said at least one circumferential reinforcement element is obtained from a band of unidirectional fibres incorporated in a polymeric material, in particular in a thermosetting resin, spirally wound around an axis parallel to the direction of the structural fibres and covered with a film of gluing substance, subjected to a moulding cycle with deformation in the cross-section.

The preparation of the reinforcement element is particularly simple and allows the amount by weight of unidirectional fibres which constitute it to be precisely controlled.

More specifically, following the moulding cycle, the cross-section of said at least one circumferential reinforcement element is substantially triangular in the case of walls intersecting as a T, like in the case of the intersection among upper bridge, side wall and wing or in the case of the intersection between a partition wall of the body region and the outer wall (side walls or lower bridge) of the body region or the upper bridge, or else substantially rhomboidal-shaped in the case of four walls intersecting as a cross, as in the case of the intersection of two perpendicular partitions of the body region.

In a variant, in order to increase the quantity of gluing substance and its uniformity of distribution, said at least one circumferential reinforcement element can be obtained from a band of unidirectional fibres incorporated in a polymeric material, in particular a thermosetting resin, spirally wound, together with a film of gluing substance, around an axis parallel to the direction of the structural fibres, subjected to a moulding cycle with deformation in the cross-section.

As an alternative to the use of unidirectional fibres in a band, dry loose fibres or else loose fibres impregnated with polymeric material, in particular with thermosetting resin, can also be used.

The use of loose unidirectional fibres allows the filling factor of the spaces between the layers of structural material forming the intersecting walls to be increased.

In a further embodiment, the unidirectional fibres could also or only be impregnated with gluing substance.

The coating film of gluing substance could in such a case and more generally in any case be missing.

In all of the aforementioned embodiments, said at least one circumferential reinforcement element can further comprise means for containing the unidirectional structural fibres preferably non-continuously extending on its outer surface, or rather extending on the entire outer surface and permeable to the gluing substance.

The containment means have the function of containing the unidirectional structural fibres during the arrangement in the mould and, during moulding, of preventing their undesired interpenetration with the adjacent layers outside the intersection zone.

Said containment means can comprise a plurality of externally helically wound unidirectional structural fibres, preferably dry.

Alternatively, said containment means can comprise a net.

Said at least one circumferential reinforcement element preferably consists of at least one, preferably at least two and most preferably four portions, each extending for an arc of circumference.

Whilst a small number of portions has the advantage of reducing the jointing points between the ends of the portions, a great number of portions means a shorter length of each of them, so that the circumferential reinforcement element which they make up can more easily withstand the stresses in the radial outwards direction, which occur during the moulding operation.

The adjacent ends of said at least one portion are preferably tapered, more preferably frusto-conical, and slightly overlapping.

Since the jointing points between adjacent ends are points of lower reinforcement of the rim, when two or more circumferential reinforcement elements are present, the ends of said at least one portion, i.e. the jointing points, of a reinforcement element are preferably arranged circumferentially staggered with respect to the ends, i.e. the jointing points, of said at least one portion of a second reinforcement element.

Even more preferably, the staggering is such that the jointing points between the ends of the portions of the various reinforcement elements are overall uniformly distributed along the circumference of the rim.

Preferably, said at least one intersection of walls of the rim comprises at least one intersection among an upper bridge wall, a side wall and a tyre coupling wing wall.

More specifically, in the case of an asymmetric rim, said tyre coupling wing wall comprises the tyre coupling wing wall on the opposite side to the oblique side wall of the circumferential body region, whereas in the case of a symmetric rim two circumferential reinforcement elements are provided between the upper bridge wall, a side wall and a tyre coupling wing wall, respectively.

In general, a circumferential reinforcement element can be provided, as an alternative or in addition, at the intersection of partition walls of the circumferential body region with each other or with the upper bridge or with the lower bridge.

The walls of the bicycle rim preferably consist of ply composite material.

In the present description and in the attached claims, the expression "ply composite material" is used in general to refer to a composite material essentially in two-dimensional form, in which the structural fibres, in general having a length higher than 50 millimetres, can be arranged in the polymeric material both in an ordered way to form a typical woven structure, and in an unordered way, for example in the form of thin sheets or pieces of fibre in general having a length of between 1 and 100 millimetres randomly arranged.

When the structural fibres are woven, the weft and warp directions preferably form angles of about 45° with the circumferential direction of the bicycle rim.

In a first preferred embodiment, the bicycle rim comprises a first layer of ply composite material defining the outer surface of the body region and the wings of the rim and at least one second layer of ply composite material defining the inner surface of a respective substantially closed radially inner circumferential chamber.

In a second preferred embodiment, the bicycle rim comprises a first layer of ply composite material defining the outer surface of the body region and the wings of the rim and a second layer of ply composite material defining the inner surface of a tyre coupling channel.

In a third preferred embodiment, the bicycle rim comprises a first layer of ply composite material defining the outer surface of the body region and the wings of the rim, a second layer of ply composite material defining the inner surface of a tyre coupling channel and at least one third layer of ply composite material defining the inner surface of a respective substantially closed radially inner circumferential chamber.

In each of the embodiments the number of plies of composite material constituting each layer is chosen by taking the conflicting requirements of thickness and strength of the rim on the one hand and of low weight on the other hand into account.

For example, in the aforementioned third embodiment, the first layer comprises five plies, the second layer also comprises five plies and the third layer comprises a single ply, so that the tyre coupling wings consist of ten plies and the upper bridge wall consists of six plies.

There can also be an additional layer of structural fibres, arranged at a spoke attachment zone.

The additional layer of structural fibres preferably comprises three plies.

The plies of the additional layer preferably have a different width to adapt to the inner curvature of the rim.

In the first and third embodiment, the plies of the additional layer are preferably placed between the first and the second layer and, between the first and the third layer, respectively.

Typically, said structural fibres, both of the rim and of each of said at least one circumferential reinforcement element, are chosen from the group consisting of carbon fibres, glass fibres, boron fibres, aramidic fibres, ceramic fibres and combinations thereof, carbon fibre being preferred.

In a second aspect thereof, the present invention concerns a method for producing a bicycle rim made of composite material based on structural fibres incorporated in a polymeric material, comprising the steps of:
a) providing a mould shaped according to an external profile of a bicycle rim, at least one element for forming a respective radially inner circumferential chamber and at least one element for forming tyre coupling wings,
b) arranging a composite material comprising structural fibres incorporated in a polymeric material in the mould about said at least one chamber formation element and partially about said at least one wing formation element,
c) subjecting the mould, said at least one chamber formation element and said at least one wing formation element to a pressure and temperature profile such as to cause the curing of the polymeric material,
d) removing the moulded bicycle rim from the mould and said at least one wing formation element from the moulded bicycle rim,
e) providing at least one reinforcement element based on unidirectional structural fibres,
f) arranging said at least one reinforcement element circumferentially at an intersection of walls of the bicycle rim to be moulded,
   characterised by the steps of:
g) embedding said unidirectional structural fibres of said at least one circumferential reinforcement element in a gluing substance.

In particular, step e) can comprise the substeps of providing a band of unidirectional structural fibres incorporated in a polymeric, material and spirally winding said band upon itself around an axis parallel to the direction of the structural fibres.

Step e) can further comprise the substep of associating a film of gluing substance with said band.

Step e) can further comprise the substep of winding containment means non-continuously on the outer surface of said reinforcement element.

Step f) can comprise arranging at least one portion of said reinforcement element circumferentially at at least one intersection of walls of the bicycle rim to be moulded, partially overlapping the ends of said at least one portion with the ends of said at least one adjacent portion.

In an embodiment, step f) comprises arranging at least one portion of said reinforcement element circumferentially at at least two intersections of walls of the bicycle rim to be moulded, the position of adjacent ends of said at least one portion at a first intersection of walls being circumferentially staggered with respect to the position of adjacent ends of said at least one portion at a second intersection of walls.

In an embodiment, step b) comprises the substeps of:
b1) arranging a first and a second layer of at least one ply of structural fibres incorporated in a polymeric material in the mould,
b2) arranging said chamber formation element over said first and second layer,
b3) folding said second layer over said chamber formation element,
b4) arranging said at least one wing formation element over said second layer and
b5) folding said first layer over said at least one wing formation element.

In another embodiment, step b) comprises the substeps of:
b1) arranging a first layer of at least one ply of structural fibres incorporated in a polymeric material in the mould,
b2) arranging said chamber formation element over said first layer,
b3) arranging a second layer of at least one ply of structural fibres incorporated in a polymeric material over said chamber formation element,
b4) arranging said at least one wing formation element over said second layer and
b5) folding said first and second layers over said at least one wing formation element.

In yet another embodiment, step b) comprises the substeps of:
b1) arranging a first and a second layer of at least one ply of structural fibres incorporated in a polymeric material in the mould,
b2) arranging said chamber formation element over said first and second layers,
b3) folding said second layer over said chamber formation element,
b4) arranging a third layer of at least one ply of structural fibres incorporated in a polymeric material over said folded second layer,
b5) arranging said at least one wing formation element over said second layer,
b6) folding said first and third layers over said at least one wing formation element.

In each of the aforementioned embodiments, step b) can further comprise the substep of arranging an additional layer of structural fibres incorporated in a polymeric material at a spoke attachment zone of the bicycle rim.

Further characteristics and advantages of the present invention shall become clearer from the following detailed description of some preferred embodiments thereof, given with reference to the attached drawings. In the drawings:
- fig. 1 illustrates a cross-section view of a bicycle rim according to the present invention,
- fig. 2 illustrates a cross-section view of the bicycle rim during an intermediate moulding step, inserted in a mould,
- fig. 3 illustrates a first embodiment of a reinforcement element according to the invention,
- fig. 4 illustrates a second embodiment of a reinforcement element according to the invention,
- fig. 5 illustrates a third embodiment of a reinforcement element according to the invention,
- fig. 6 illustrates a preferred arrangement of portions of two reinforcement elements according to the invention,
- fig. 7 illustrates an enlarged detail of fig. 6,
- fig. 8 illustrates an enlarged detail of fig. 1, and
- fig. 9 illustrates a cross-section view of a bicycle rim having a plurality of reinforcement elements according to the invention.

In a particularly preferred manner, a bicycle rim according to the present invention is produced according to the method described hereafter, which is an improvement according to the invention of the method described in EP 1 231 077, to which reference shall be made for further details.

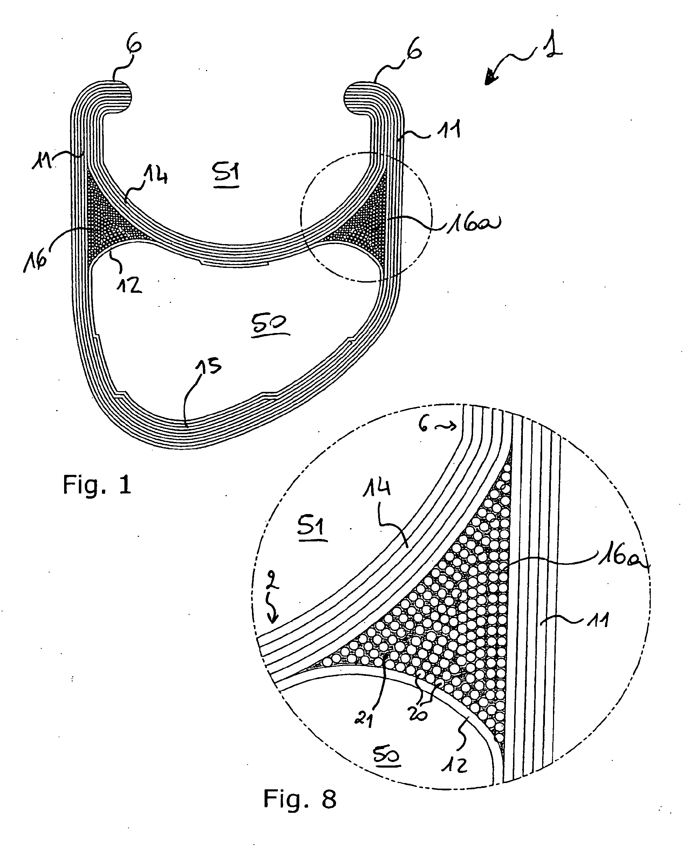

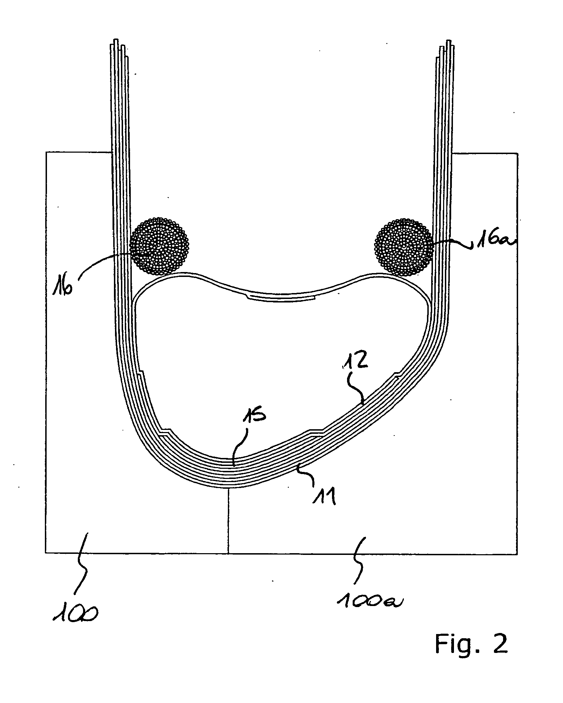

With combined reference to Figures 1 and 2, in an inner half-mould formed by two portions 100, 100a, a first layer 11 is arranged, of five plies formed of woven carbon fibres impregnated with thermosetting resin. The weft and warp directions of the plies form an angle of +45° and -45° with the circumferential direction.

Over the first layer 11, in a zone intended for the attachment of spokes of the wheel of the bicycle, an additional layer 15 of three plies, of decreasing width, of woven carbon fibres impregnated with thermosetting resin is laid. The weft and warp directions of the plies form an angle of +45° and -45° with the circumferential direction.

Over the first layer 11 and the additional layer 15, a second layer 12 of a ply of woven carbon fibres impregnated with thermosetting resin is arranged. The weft and warp directions of the ply form an angle of +45° and -45° with the circumferential direction.

Over the second layer 12 an inflatable bag is arranged (not shown, but fully described in EP 1 231 077) intended, once inflated, to apply a pressure of the layers against the walls of the mould and against wing formation elements (see hereinbelow) to form a substantially closed chamber 50 in the radially inner circumferential body region of the bicycle rim.

The ply which constitutes the second layer 12 is folded over the inflatable bag.

On the opposite side to the oblique wall of the half-mould 100, 100a, where the second layer 12 thus folded departs from the first layer 11, a reinforcement element 16 is arranged over the folded second layer 12.

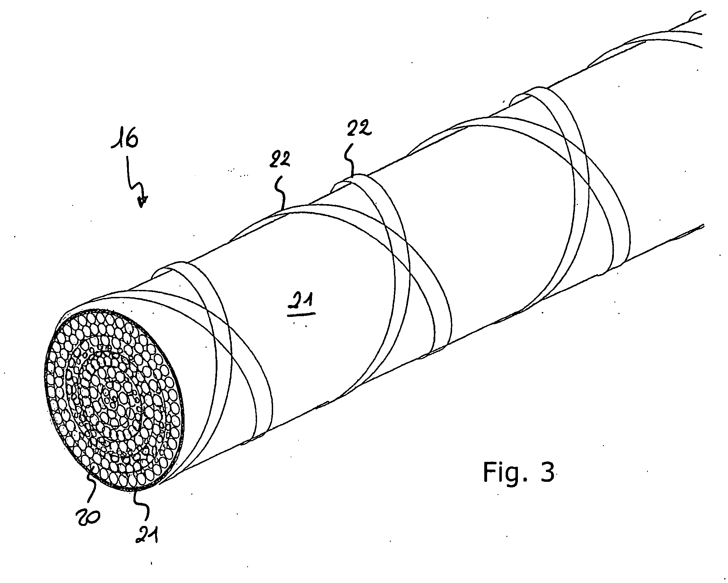

In a first embodiment illustrated in Figure 3, the reinforcement element 16 comprises a substantially cylindrical core obtained from a band 20 of unidirectional carbon fibres impregnated with thermosetting resin, spirally wound around the direction defined by the unidirectional carbon fibres.

The thermosetting resin of the reinforcement element 16 has the same composition of the thermosetting resin of the composite material of the rim 1 and therefore it reticulates with the same thermal cycles used for the moulding of the rim.

The wound band core 20 is enclosed by a film 21 of gluing substance, like for example a thermosetting epoxy glue.

The wound band core 20 and the film of gluing substance 21 are also wrapped by containment means represented in Figure 3 by spirally wound unidirectional fibres 22.

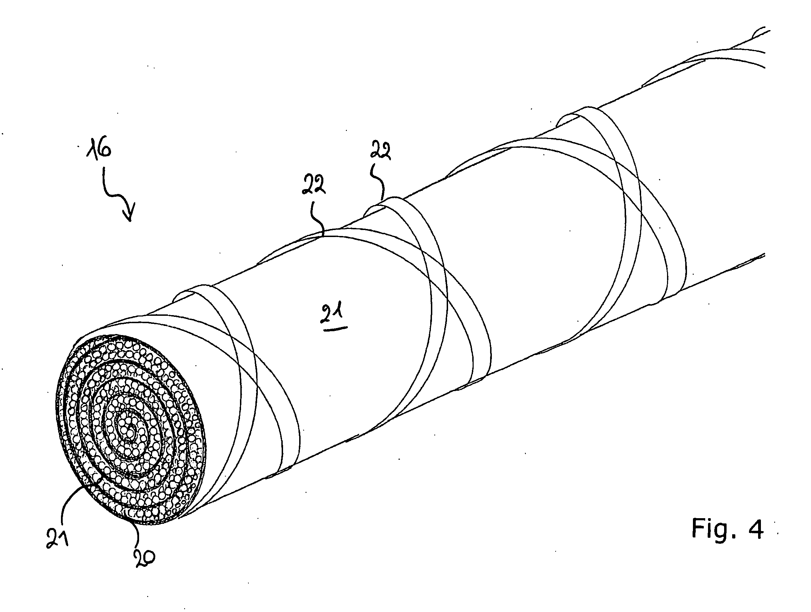

In a second embodiment, illustrated in Figure 4, the band 20 of unidirectional carbon fibres impregnated with thermosetting resin is spirally wound together with the film of gluing substance 21, around the direction defined by the unidirectional carbon fibres.

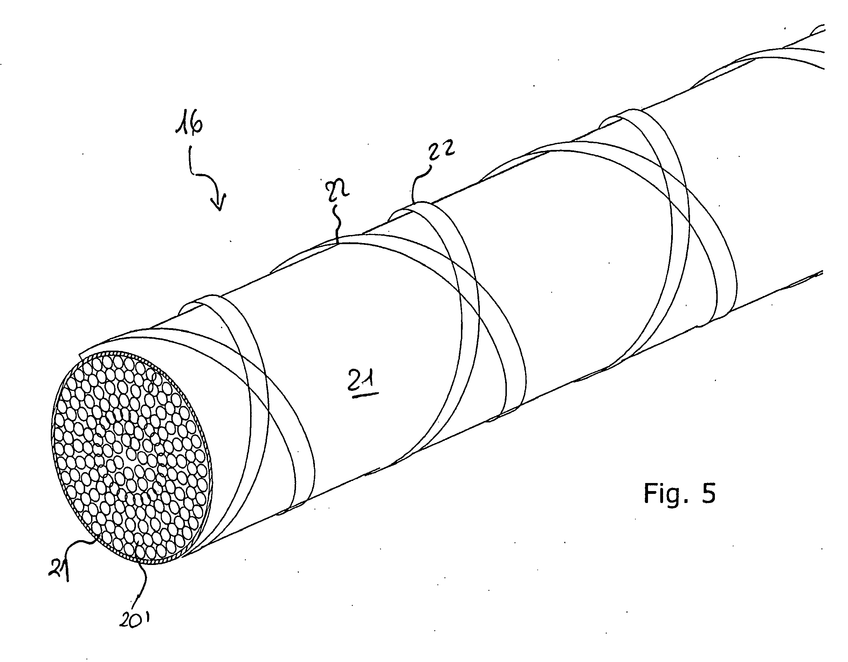

In a third embodiment, illustrated in Figure 5, the reinforcement element 16 consists of a bundle of loose unidirectional structural fibres 20' wrapped by a film 21 of gluing substance.

The unidirectional structural fibres 20' are impregnated with thermosetting resin.

Optionally, a second reinforcement element 16a is arranged over the folded second layer 12 on the side of the oblique wall of the half-mould 100, 100a, where the second layer 12 thus folded departs from the first layer 11.

In the case of a symmetrical bicycle rim (not shown), two reinforcement elements 16, 16a are arranged in a symmetrical position with respect to the circumferential middle plane of the rim.

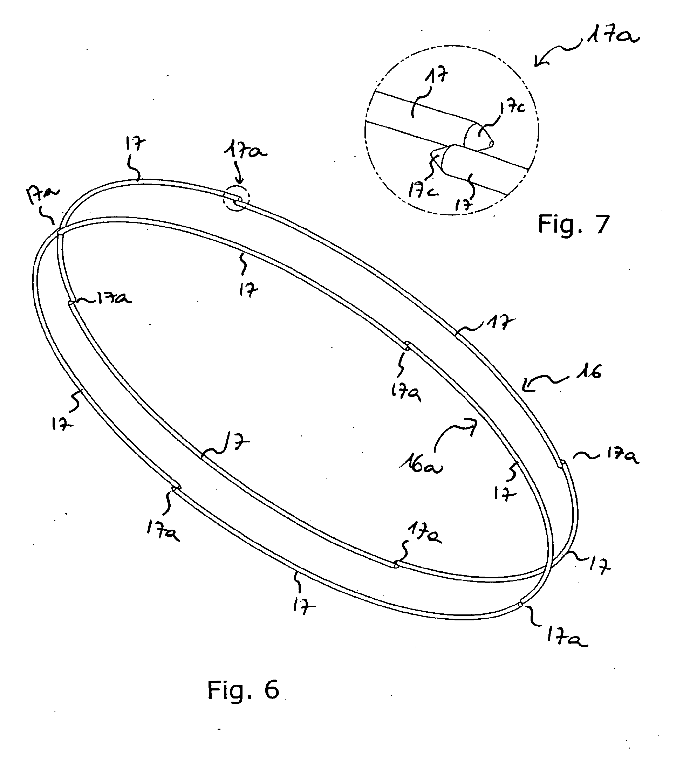

More specifically, with reference to Figures 6 and 7, each reinforcement element 16, 16a comprises a certain number of portions 17, four in the illustrated example, wherein the portions 17 of a reinforcement element 16 are arranged circumferentially staggered with respect to the portions 17 of the reinforcement element 16a so that the joints 17a between adjacent ends 17c of the portions 17, which represent points of lower reinforcement of the rim, are distributed, preferably uniformly, along the circumference of the rim (in the illustrated case, the joints are spaced by 45° along such a circumference).

Moreover, the portions 17 of the reinforcement elements 16, 16a have the ends 17c tapered, in particular frusto-conical as illustrated in the enlargement of Figure 7, and the portions 17 are arranged in the mould 100, 100a so that the adjacent ends of the portions 17 slightly overlap. The tapering of the ends 17c allows a thickness and an amount of fibres substantially equal to those along the length of the portions 17 to be maintained in the jointing zones 17a.

Going back to the description of the manufacturing method, over the folded second layer 12 and over the reinforcement element(s) 16, 16a, a third layer 14 of five plies of woven carbon fibres impregnated with thermosetting_resin is laid. The weft and warp directions of the plies form an angle of +45° and -45° with the circumferential direction.

One or two suitably shaped elements (not shown, but fully described in EP 1 231 077), intended to shape a tyre coupling channel 51 and in particular tyre coupling wings 6, are arranged over the third layer 14 and over the reinforcement elements 16 and 16a, if any.

The first and the third layer 11, 14 are folded over the shaped wing formation element(s).

The mould is then closed and subjected to a temperature profile suitable for the reticulation of the thermosetting resin. At the same time, the inflatable bag is inflated to a pressure suitable for pressing the layers 11, 12, 15 against the walls of the mould and against the wing formation elements. These in turn apply a suitable pressure, for example being formed of heat expandable material or suitably elastic material, as described e.g. in EP 1 231 077.

As for the reinforcement element(s) 16 and 16a, if any, during the moulding cycle, due to the pressure and the temperature, the gluing substance 21 melts and distributes between the unidirectional structural fibres 20, 20' throughout the space defined between the layers 11, 12, 14, by mixing with the thermosetting resin with which the unidirectional structural fibres 20 are impregnated.

At the same time, the unidirectional fibres 20, 20' move owing to the pressures involved in the radial and axial direction, thus filling, together with the gluing substance coming from the film 21, the space between the walls of the rim.

Thanks to the helical containment fibres 22, the unidirectional fibres 20, 20', during the moulding, remain confined in the intersection zone of the walls, avoiding their interpenetration in undesired zones, for example upwards with reference to the figures, between the layers 11 and 14 which define the wings 6.

Once the process of reticulation of the thermosetting resin and of curing of the gluing substance has taken place, the circumferential reinforcement element 16, 16a therefore assumes a cross-section shaped according to the space between the intersecting walls, in other words substantially triangular as illustrated in Figure 1 and in the enlargement of Figure 8.

The provision of reinforcement elements 16, 16a formed by many portions 17 with partial overlapping of adjacent ends 17c of the portions allows the reinforcement elements 16, 16a to react to the pressure stresses from the inside during the moulding process by moving in the radial direction outwards, without any longitudinal stresses of the unidirectional fibres 20, 20'. The overlapping zones are such that the adjacent ends 17c of the portions 17 substantially overlap for only the tapered zone after the moulding process, so as to obtain, as stated above, a uniformity of the reinforcement element 16, 16a along the whole circumference.

The gluing substance of the film 21 has a high elongation at break coefficient, as well as a high intralaminar shear strength, higher than those of the thermosetting resin of the composite material of the rim.

The provision of a gluing substance having a high intralaminar shear strength hinders the reciprocal sliding of the plies of adjacent layers, like the layers 11 and 14, 11 and 12, 12 and 14.

The mould is then opened and the bicycle rim 1 is removed. The wing formation element(s) is(are) removed from the tyre coupling channel 51, the inflatable bag is deflated and possibly removed through a suitable opening, for example an opening provided for the tyre inflation valve.

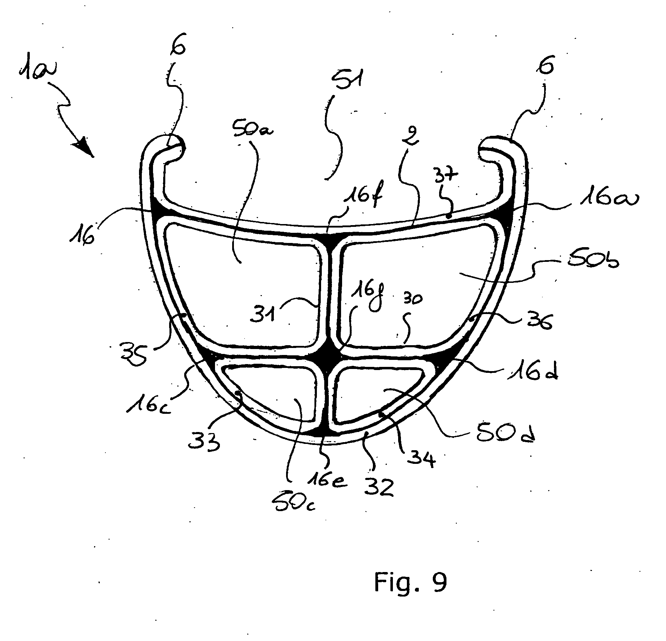

The present invention can equally be applied in bicycle rims with a more complex cross-section, as illustrated by way of an example by the rim 1a in Figure 9, wherein a partition 30 parallel to the upper bridge 2 and a partition 31 perpendicular to it divide the radially inner circumferential body region into four chambers 50a-50d.

A rim with such a section can for example be formed of the layers 32-37, of which the various component plies are not illustrated, and which are arranged in the mould and folded around four chamber formation elements (not illustrated) in a totally analogous way to that which has been described above, as it shall be clear to those skilled in the art.

In a rim with such a section, as an alternative or in addition to reinforcement elements 16 and 16a positioned at the intersections among the upper bridge 2, the tyre coupling'wings 6 and the side walls of the body region, one or more of two reinforcement elements 16c and 16d at the intersections between the parallel partition 30 and the outer wall of the body region, a reinforcement element 16e at the intersection between the perpendicular partition 31 and the outer wall of the body region, a reinforcement element 16f at the intersection between the perpendicular partition 31 and the upper bridge 2 and a reinforcement element 16g at the intersection between the two partitions 30, 31 may be provided.

It should be noted that the reinforcement element 16g, if any, is essentially rhomboid-shaped in the finished rim.

Those skilled in the art will easily understand that the present invention must not be limited to the embodiments illustrated and described, but that it is susceptible to different variants, as illustrated hereafter again by way of an example and not of limitation of the invention.

The composite material based on structural fibres must not necessarily be made of woven ply with the weft and warp directions described above. Other orientations can be used, as well as non-woven plies, such as a polymeric material having structural fibres dispersed in it, for example in the form of thin sheets randomly arranged, and also non-ply material, for example structural fibres in the form of thin sheets or pieces of fibre having a length of between 1 and 100 millimetres randomly arranged in the mould.

As an alternative to carbon fibres, glass fibres, boron fibres, aramidic fibres, ceramic fibres or a combination thereof can be used.

When ply composite materials are used, the layers 11, 12, 14, 15 can be formed by a different number of plies with respect to what has been indicated above.

There can be just one of the layers 12 and 14.

The layer 15 can be missing or arranged over the layer 12.

As far as each reinforcement element is concerned, in particular in the embodiment of figure 5, the unidirectional fibres can also be dry fibres, namely the thermosetting resin or other polymeric material can be missing.

As an alternative or in addition to thermosetting resin, the unidirectional fibres can be impregnated with gluing substance.

The film of gluing substance 21 can be missing.

As an alternative to the helically wound unidirectional fibres 22, the containment means of the reinforcement element can consist of a net made of a suitable material or a of continuous coating of material permeable to the gluing substance.

The thermosetting resin of the reinforcement element 16 can be different from the thermosetting resin of the layers forming the bicycle rim.

More generally, both in the reinforcement element 16 and in the rim 1, as an alternative to the thermosetting resin a different polymeric material can be used, including thermoplastic materials. It is clear that in such a case no reticulation will take place, rather hardening of the thermoplastic material will take place.

## Claims

1. Bicycle rim (1, 1a) made of composite material based on structural fibres incorporated in a polymeric material, comprising at least one circumferential reinforcement element (16-16g) based on unidirectional structural fibres (20, 20') extending at a respective intersection of walls of the rim, the direction of the structural fibres being circumferential, **characterised in that** said unidirectional structural fibres (20, 20') of said at least one circumferential reinforcement element (16-16g) are embedded in a gluing substance (21).

2. Bicycle rim according to claim 1, **characterised in that** said gluing substance (21) has a elongation at break coefficient higher than that of the polymeric material.

3. Bicycle rim according to claim 1 or 2, **characterised in that** said gluing substance (21) has an intralaminar shear strength higher than that of the polymeric material.

4. Bicycle rim according to one of the previous claims, **characterised in that** the unidirectional structural fibres (20, 20') of said at least one reinforcement element (16-16g) are incorporated in a polymeric material.

5. Bicycle rim according to claim 4, **characterised in that** the polymeric material of said at least one circumferential reinforcement element (16-16g) has the same composition of the polymeric material of the rim.

6. Bicycle rim according to one of the previous claims, **characterised in that** said at least one circumferential reinforcement element (16-16g) is obtained from a band of unidirectional fibres (20) incorporated in a polymeric material spirally wound around an axis parallel to the direction of the structural fibres and coated with a film of gluing substance (21), subjected to a moulding cycle with deformation in the cross-section.

7. Bicycle rim according to one of the previous claims, **characterised in that** said at least one circumferential reinforcement element (16-16g) is obtained from a band of unidirectional fibres (20) incorporated in a polymeric material spirally wound, together with a film of gluing substance (21), around an axis parallel to the direction of the structural fibres, subjected to a moulding cycle with deformation in the cross-section.

8. Bicycle rim according to one of the previous claims, **characterised in that** said at least one circumferential reinforcement element (16-16g) is obtained from a band of loose unidirectional fibres (20') impregnated with polymeric material, coated with a film of gluing substance (21), subjected to a moulding cycle with deformation in the cross-section.

9. Bicycle rim according to one of the previous claims, **characterised in that** at least one circumferential reinforcement element (16-16f) is provided at a T-shaped intersection of walls of the rim and is substantially triangular in cross-section.

10. Bicycle rim according to one of the previous claims, **characterised in that** at least one circumferential reinforcement element (16g) is provided at a cross-shaped intersection of walls of the rim and is substantially rhomboidal-shaped in cross-section.

11. Bicycle rim according to one of the previous claims, **characterised in that** said at least one circumferential reinforcement element (16-16g) further comprises containment means (22) of the unidirectional structural fibres (20, 20') non-continuously extending on the outer surface thereof.

12. Bicycle rim according to claim 11, **characterised in that** said containment means (22) comprise a plurality of externally helically wound unidirectional structural fibres, preferably dry.

13. Bicycle rim according to one of the previous claims, **characterised in that** said at least one circumferential reinforcement element (16-16g) consists of at least one, preferably at least two and most preferably four portions (17), each extending for an arc of circumference.

14. Bicycle rim according to claim 13, **characterised in that** adjacent ends (17c) of said at least one portion (17) are tapered, preferably frusto-conical, and slightly overlapping.

15. Bicycle rim according to one of claims 13-14, **characterised in that** the ends (17c) of said at least one portion (17) of a first reinforcement element (16) are arranged circumferentially staggered with respect to the ends (17c) of said at least one portion (17) of a second reinforcement element (16a).

16. Bicycle rim according to any of the previous claims, **characterised in that** said at least one intersection of walls of the rim comprises at least one intersection between an upper bridge wall (2), a side wall of a body region of the rim and a tyre coupling wing wall (6).

17. Bicycle rim according to any of the previous claims, **characterised in that** it comprises a first layer (11; 32) of ply composite material defining the outer surface of a body region of the rim and the wings (6) of the rim and at least one second layer (12) of ply composite material defining the inner surface of a respective substantially closed radially inner circumferential chamber (50; 50a-50d).

18. Bicycle rim according to any of claims 1-16, **characterised in that** it comprises a first layer (11; 32) of ply composite material defining the outer surface of a body region of the rim and the wings (6) of the rim and a second layer (14; 37) of ply composite material defining the inner surface of a tyre coupling channel (51).

19. Bicycle rim according to any of claims 1-16, **characterised in that** it comprises a first layer (11; 32) of ply composite material defining the outer surface of a body region and the wings (6) of the rim, a second layer (14; 37) of composite material defining the inner surface of a tyre coupling channel (51) and at least one third layer (12; 33-36) of ply composite material defining the inner surface of a respective substantially closed radially inner circumferential chamber (50; 50a-50d).

20. Bicycle rim according to any of claims 17-19, **characterised in that** it further comprises an additional layer (15) of composite material, arranged at a spoke attachment zone.

21. Bicycle rim according to any of claims 17-20, **characterised in that** said structural fibres of said ply composite material are woven, the weft and warp directions most preferably forming an angle of 45° with the circumferential direction.

22. Bicycle rim according to any of claims 17-20, **characterised in that** said structural fibres of said ply composite material are randomly arranged within said polymeric material.

23. Bicycle rim according to any of the previous claims, **characterised in that** said structural fibres are chosen from the group consisting of carbon fibres, glass fibres, boron fibres, aramidic fibres, ceramic fibres and combinations thereof, carbon fibres being preferred.

24. Bicycle rim according to any of the previous claims, **characterised in that** said polymeric material is a thermosetting resin.

25. Method for making a bicycle rim (1, 1a) made of composite material based on structural fibres incorporated in a polymeric material, comprising the steps of:
a) providing a mould (100, 100a) shaped according to an external profile of a bicycle rim (1, 1a), at least one element for forming a respective radially inner circumferential chamber (50; 50a-50d) and at least one element for forming tyre coupling wings (6),
b) arranging a composite material comprising structural fibres incorporated in a polymeric material in the mould (100, 100a) about said at least one chamber (50; 50a-50d) formation element and partially about said at least one wing (6) formation element,
c) subjecting the mould (100, 100a), said at least one chamber (50; 50a-50d) formation element and said at least one wing (6) formation element to a pressure and temperature profile such as to cause the curing of the polymeric material,
d) removing the moulded bicycle rim (1, 1a) from the mould (100, 100a) and said at least one wing (6) formation element from the moulded bicycle rim (1, 1a),
e) providing at least one reinforcement element (16-16g) based on unidirectional structural fibres (20, 20'),
f) arranging said at least one reinforcement element (16-16g) circumferentially at an intersection of walls of the bicycle rim (1, 1a) to be moulded, **characterised by** the steps of:
g) embedding said unidirectional structural fibres (20, 20') of said at least one circumferential reinforcement element (16-16g) in a gluing substance (21).

26. Method according to claim 25, **characterised in that** said step e) comprises the substeps of:
e1) providing a band of unidirectional structural fibres (20, 20') incorporated in a polymeric material,
e2) spirally winding said band upon itself around an axis parallel to the direction of the structural fibres (20, 20').

27. Method according to claim 26, **characterised in that** said steps g) and e) comprise:
e3) associating a film of gluing substance (21) with said band.

28. Method according to claim 26 or 27, **characterised in that** said step e) further comprises the substep of:
e4) winding containment means (22) non-continuously on the outer surface of said reinforcement element (16-16g).

29. Method according to any of claims 25-28, **characterised in that** said step f) comprises arranging at least one portion (17) of said reinforcement element (16-16g) circumferentially at at least one intersection of walls of the bicycle rim (1, 1a) to be moulded, partially overlapping the ends (17c) of said at least one portion with the ends (17c) of said at least one adjacent portion (17).

30. Method according to any of claims 25-29, **characterised in that** said step f) comprises arranging at least one portion (17) of said reinforcement element (16-16g) circumferentially at at least two intersections of walls of the bicycle rim to be moulded, the position of adjacent ends (17c) of said at least one portion (17) at a first intersection of walls being circumferentially staggered with respect to the position of adjacent ends (17c) of said at least one portion (17) at a second intersection of walls.

31. Method according to any of claims 25-30, **characterised in that** said step b) comprises the substeps of:
b1) arranging a first (11; 32) and a second layer (12; 33-36) of at least one ply of structural fibres incorporated in a polymeric material in the mould (100, 100a),
b2) arranging said chamber (50; 50a-50d) formation element over said first (11; 32) and second layer (12; 33-36),
b3) folding said second layer (12; 33-36) over said chamber (50; 50a-50d) formation element,
b4) arranging said at least one wing (6) formation element over said second layer (12; 33-36) and
b5) folding said first layer (11; 32) over said at least one wing (6) formation element.

32. Method according to any of claims 25-30, **characterised in that** said step b) comprises the substeps of:
b1) arranging a first layer (11; 32) of at least one ply of structural fibres incorporated in a polymeric material in the mould (100, 100a),
b2) arranging said chamber (50; 50a-50d) formation element over said first layer (11; 32),
b3) arranging a second layer (14; 37) of at least one ply of structural fibres incorporated in a polymeric material over said chamber (50; 50a-50d) formation element,
b4) arranging said at least one wing (6) formation element over said second layer (14; 37) and
b5) folding said first (11; 32) and second layers (14; 37) over said at least one wing (6) formation element.

33. Method according to any of claims 25-30, **characterised in that** said step b) comprises the substeps of:
b1) arranging a first (11; 32) and a second layer (12; 33-36) of at least one ply of structural fibres incorporated in a polymeric material in the mould (100, 100a),
b2) arranging said chamber (50; 50a-50d) formation element over said first (11; 32) and second layers (12; 33-36),
b3) folding said second layer (12) over said chamber (50; 50a-50d) formation element,
b4) arranging a third layer (14; 37) of at least one ply of structural fibres incorporated in a polymeric material over said folded second layer (12; 33-36),
b5) arranging said at least one wing (6) formation element over said second layer (12; 33-36),
b6) folding said first (11; 32) and third layers (12; 37) over said at least one wing (6) formation element.

34. Method according to any of claims 25-33, **characterised in that** said step b) further comprises the substep of arranging an additional layer (15) of structural fibres incorporated in a polymeric material at a spoke attachment zone of the bicycle rim (1, 1a).

35. Method according to any of claims 25-34, **characterised in that** said structural fibres forming said plies are woven, the weft and warp directions most preferably forming an angle of 45° with the circumferential direction.

## Patentansprüche

1. Fahrradfelge (1,1a) aus einem Kompositmaterial auf der Grundlage von Strukturfasern, die in ein Polymermaterial eingebettet sind, enthaltend wenigstens ein Umfangsverstärkungselement (16-16g) auf der Grundlage von unidirektionalen Strukturfasern (20,20'), die sich an einer entsprechenden Überschneidung von Wänden der Felge erstrecken, wobei die Strukturfasern in Umfangsrichtung verlaufen, **dadurch gekennzeichnet, dass** die unidirektionalen Strukturfasern (20,20') des wenigstens einen Umfangsverstärkungselements (16-16g) in eine Klebsubstanz (21) eingebettet sind.

2. Fahrradfelge nach Anspruch 1, **dadurch gekennzeichnet, dass** die Klebsubstanz (21) eine Längung beim Bruchkoeffizienten hat, die höher als die des Polymermaterials ist.

3. Fahrradfelge nach Anspruch 1 oder 2, **dadurch gekennzeichnet, dass** die Klebsubstanz (21) eine intralaminare Scherfestigkeit hat, die höher als die des Polymermaterials ist.

4. Fahrradfelge nach einem der vorhergehenden Ansprüche, **dadurch gekennzeichnet, dass** die unidirektionalen Strukturfasern (20,20') des wenigstens einen Verstärkungselements (16-16g) in ein Polymermaterial eingebettet sind.

5. Fahrradfelge nach Anspruch 4, **dadurch gekennzeichnet, dass** das Polymermaterial des wenigstens einen Umfangsverstärkungselements (16-16g) die gleiche Zusammensetzung wie das Polymermaterial der Felge hat.

6. Fahrradfelge nach einem der vorhergehenden Ansprüche, **dadurch gekennzeichnet, dass** das wenigstens eine Umfangsverstärkungselement (16-16g) aus einem Band aus unidirektionalen Fasern (20) erhalten ist, das in ein Polymermaterial eingebettet ist, das spiralförmig um eine Achse parallel zur Richtung der Strukturfasern gewunden und mit einem Film aus Klebsubstanz (21) beschichtet ist, und das einem Formungszyklus mit Verformung im Querschnitt unterworfen wurde.

7. Fahrradfelge nach einem der vorhergehenden Ansprüche, **dadurch gekennzeichnet, dass** das wenigstens eine Umfangsverstärkungselement (16-16g) aus einem Band aus unidirektionalen Fasern (20) erhalten ist, das in ein Polymermaterial eingebettet ist, das zusammen mit einem Film aus Klebsubstanz um eine Achse parallel zur Richtung der Strukturfasern gewunden ist, und das einem Formungszyklus mit Verformung im Querschnitt unterworfen wurde.

8. Fahrradfelge nach einem der vorhergehenden Ansprüche, **dadurch gekennzeichnet, dass** das wenigstens eine Umfangsverstärkungselement (16-16g) aus einem Band aus losen unidirektionalen Fasern (20') erhalten ist, das mit Polymermaterial imprägniert, mit einem Film aus Klebsubstanz (21) beschichtet und einem Formungszyklus mit Verformung im Querschnitt unterworfen wurde.

9. Fahrradfelge nach einem der vorhergehenden Ansprüche, **dadurch gekennzeichnet, dass** wenigstens ein Umfangsverstärkungselement (16-16f) mit einer T-förmigen Überschneidung von Wänden der Felge versehen und im Querschnitt im Wesentlichen dreieckig ist.

10. Fahrradfelge nach einem der vorhergehenden Ansprüche, **dadurch gekennzeichnet, dass** wenigstens ein Umfangsverstärkungselement (16g) mit einer kreuzförmigen Überschneidung von Wänden der Felge versehen ist und im Querschnitt im Wesentlichen rhombisch gestaltet ist.

11. Fahrradfelge nach einem der vorhergehenden Ansprüche, **dadurch gekennzeichnet, dass** das wenigstens eine Umfangsverstärkungselement (16-16g) weiterhin Einbindungseinrichtungen (22) der unidirektionalen Strukturfasern (20,20') enthält, die sich unzusammenhängend an der Außenoberfläche derselben erstrecken.

12. Fahrradfelge nach Anspruch 11, **dadurch gekennzeichnet, dass** die Einbindungseinrichtungen (22) mehrere außen wendelförmig gewundene, unidirektionale, vorzugsweise trockene Strukturfasern aufweisen.

13. Fahrradfelge nach einem der vorhergehenden Ansprüche, **dadurch gekennzeichnet, dass** das wenigstens eine Umfangsverstärkungselement (16-16g) aus wenigstens einem, vorzugsweise wenigstens zwei und am besten vier Abschnitten (17) besteht, die sich jeweils über einen Umfangsbogen erstrecken.

14. Fahrradfelge nach Anspruch 13, **dadurch gekennzeichnet, dass** benachbarte Enden (17c) des wenigstens einen Abschnitts (17) sich verjüngen, vorzugsweise kegelstumpfförmig, und sich leicht überlappen.

15. Fahrradfelge nach einem der Ansprüche 13 bis 14, **dadurch gekennzeichnet, dass** die Enden (17c) des wenigstens einen Abschnitts (17) eines ersten Verstärkungselements (16) in Umfangsrichtung gegenüber den Enden (17c) des wenigstens einen Abschnitts (17) eines zweiten Verstärkungselements (16a) versetzt sind.

16. Fahrradfelge nach einem der vorhergehenden Ansprüche, **dadurch gekennzeichnet, dass** die wenigstens eine Überschneidung von Wänden der Felge wenigstens eine Überschneidung zwischen einer oberen Brückenwand (2), einer Seitenwand eines Hauptkörperbereichs der Felge und einer den Reifen haltenden Flügelwand (6) aufweist.

17. Fahrradfelge nach einem der vorhergehenden Ansprüche, **dadurch gekennzeichnet, dass** sie eine erste Schicht (11;32) aus Lagenkomposit-Material enthält, die die Außenfläche eines Hauptkörperbereichs der Felge und der Flügel (6) der Felge bildet, sowie wenigstens eine zweite Schicht (12) aus Lagenkomposit-Material, das die innere Oberfläche einer entsprechenden, im Wesentlichen geschlossenen, radial inneren Umfangskammer (50;50a-50d) bildet.

18. Fahrradfelge nach einem der Ansprüche 1 bis 16, **dadurch gekennzeichnet, dass** sie eine erste Schicht (11;32) aus Lagenkomposit-Material aufweist, die die Außenfläche eines Hauptkörperbereichs der Felge und der Flügel (6) der Felge bildet, sowie eine zweite Schicht (14;37) aus Lagenkomposit-Material, die die innere Oberfläche eines Reifenanschlusskanals (51) bildet.

19. Fahrradfelge nach einem der Ansprüche 1 bis 16, **dadurch gekennzeichnet, dass** sie eine erste Schicht (11;32) aus Lagenkomposit-Material aufweist, die die Außenfläche eines Hauptkörperbereichs und der Flügel (6) der Felge bildet, sowie eine zweite Schicht (14;37) aus Kompositmaterial, die die innere Oberfläche eines Reifenanschlusskanals (51) bildet, und wenigstens eine dritte Schicht (12;33-36) aus Lagenkomposit-Material, das die innere Oberfläche einer entsprechenden, im Wesentlichen geschlossenen, radial inneren Umfangskammer (50;50a-50d) bildet.

20. Fahrradfelge nach einem der Ansprüche 17 bis 19, **dadurch gekennzeichnet, dass** sie weiterhin eine zusätzliche Schicht (15) aus Kompositmaterial aufweist, die an einer Speichenbefestigungszone angeordnet ist.

21. Fahrradfelge nach einem der Ansprüche17 bis 20, **dadurch gekennzeichnet, dass** die Strukturfasern des Lagenkomposit-Materials gewebt sind, wobei die Schuss- und Kett-Richtungen am besten einen Winkel von 45° mit der Umfangsrichtung bilden.

22. Fahrradfelge nach einem der Ansprüche 17 bis 20, **dadurch gekennzeichnet, dass** die Strukturfasern des Lagenkomposit-Materials innerhalb des Polymermaterials wirr angeordnet sind.

23. Fahrradfelge nach einem vorhergehenden Ansprüche, **dadurch gekennzeichnet, dass** die Strukturfasern aus der Gruppe ausgewählt sind, die aus Kohlefasern, Glasfasern, Borfasern, Aramidfasern, Keramikfasern und Kombinationen davon besteht, wobei Kohlefasern bevorzugt sind.

24. Fahrradfelge nach einem der vorhergehenden Ansprüche, **dadurch gekennzeichnet, dass** das Polymermaterial ein thermofixierendes Kunstharz ist.

25. Verfahren zum Herstellen einer Fahrradfelge (1,1a) aus einem Kompositmaterial auf der Grundlage von Strukturfasern, die in ein Polymermaterial eingebettet sind, umfassend die Schritte:
a) Bereitstellen einer Form (100,100a), die entsprechend einem äußeren Profil einer Fahrradfelge (1,1a) gestaltet ist, mit wenigstens einem Element zum Ausbilden einer entsprechenden, radial inneren Umfangskammer (50;50a-50g) und wenigstens einem Element zum Ausbilden von Reifenanschlussflügeln (6),
b) Anordnen eines Kompositmaterials, das in ein Polymermaterial eingebettete Strukturfasern enthält, in der Form (100,100a) um das wenigstens eine eine Kammer (50;50a-50d) ausbildende Element und teilweise um das wenigstens eine die Flügel (6) ausbildende Element,
c) Unterwerfen der Form (100,100a), des wenigstens einen die Kammer (50; 50a-50d) ausbildende Elements und das wenigstens eine die Flügel (6) ausbildende Elements einem Druck- und Temperaturprofil, um das Aushärten des Polymermaterials zu verursachen,
d) Entnehmen der geformten Fahrradfelge (1;1a) aus der Form (100,100a) und des den Flügel (6) ausbildende Elements aus der geformten Fahrradfelge (1,1a),
e) Bereitstellen wenigstens eines Verstärkungselements (16-16g), das auf unidirektionalen Strukturfasern (20,20') basiert,
f) Anordnen des wenigstens einen Verstärkungselements (16-16g) in Umfangsrichtung an einer Überschneidung von Wänden der zu formenden Fahrradfelge (1,1a), **gekennzeichnet durch** die Schritte:
g) Einbetten der unidirektionalen Strukturfasern (20,20') des wenigstens einen Umfangsverstärkungselements (16-16g) in eine Klebsubstanz (21).

26. Verfahren nach Anspruch 25, **dadurch gekennzeichnet, dass** der Schritt e) die folgenden Unterschritte umfasst:
e1) Bereitstellen eines Bandes aus unidirektionalen Strukturfasern (20,20'), die in ein Polymermaterial eingebettet sind,
e2) spiralförmiges Wickeln dieses Bandes um sich selbst um eine Achse parallel zur Richtung der Strukturfasern (20,20').

27. Verfahren nach Anspruch 26, **dadurch gekennzeichnet, dass** die Schritte g) und e) umfassen:
e3) Verbinden eines Films aus Klebsubstanz (21) mit dem Band.

28. Verfahren nach Anspruch 26 oder 27, **dadurch gekennzeichnet, dass** der Schritt e) weiterhin den folgenden Unterschritt umfasst:
e4) unzusammenhängendes Wickeln von Umbindungseinrichtungen (22) auf die äußere Oberfläche des Verstärkungselements (16-16g).

29. Verfahren nach einem der Ansprüche 25 bis 28, **dadurch gekennzeichnet, dass** der Schritt f) umfasst: Anordnung wenigstens eines Abschnitts (17) des Verstärkungselements (16-16g) in Umfangsrichtung an wenigstens einer Überschneidung von Wänden der zu erstellenden Fahrradfelge (1,1a), die Enden (17c) des wenigstens einen Abschnitts mit den Enden (17c) des wenigstens einen benachbarten Abschnitts (17) überlappend.

30. Verfahren nach einem der Ansprüche 25 bis 28, **dadurch gekennzeichnet, dass** der Schritt f) umfasst: Anordnen wenigstens eines Abschnitts (17) des Verstärkungselements (16-16g) in Umfangsrichtung an wenigstens zwei Überschneidungen von Wänden der zu erstellenden Fahrradfelge, wobei die Lage benachbarter Enden (17c) des wenigstens einen Abschnitts (17) an einer ersten Überschneidung von Wänden gegenüber der Lage benachbarter Enden (17c) des wenigstens einen Abschnitts (17) an einer zweiten Überschneidung von Wänden in Umfangsrichtung versetzt ist.

31. Verfahren nach einem der Ansprüche 25 bis 30, **dadurch gekennzeichnet, dass** der Schritt b) die folgenden Unterschritte umfasst:
b1) Anordnen einer ersten (11;32) und einer zweiten (12;33-36) Schicht aus wenigstens einem Band aus Strukturfasern, die in ein Polymermaterial eingebettet sind, in der Form (100,100a),
b2) Anordnen des die Kammer (50;50a-50d) bildenden Elements über der ersten (11;32) und der zweiten Schicht (12;33-36),
b3) Falten der zweiten Schichten (12;33-36) über das die Kammer (50;50a-50d) ausbildende Element,
b4) Anordnen des wenigstens einen die Flügel (6) ausbildenden Elements über der zweiten Schicht (12;33-36) und
b5) Falten der ersten Schicht (11;32) über das wenigstens eine die Flügel (6) ausbildende Element).

32. Verfahren nach einem der Ansprüche 25 bis 30, **dadurch gekennzeichnet, dass** der Schritt b) die folgenden Unterschritte umfasst:
b1) Anordnen einer ersten Schicht (11;32) aus wenigstens einer Lage aus in ein Polymermaterial eingebetteten Strukturfasern in der Form (100,100a),
b2) Anordnen des die Kammer (50;50a-50d) ausbildenden Elements über der ersten Schicht (11;32),
b3) Anordnen einer zweiten Schicht (14;37) aus wenigstens einer Lage aus in ein Polymermaterial eingebettenen Strukturfasern über dem die Kammer (50;50a-50d) ausbildenden Element,
b4) Anordnen des wenigstens einen die Flügel (6) ausbildenden Elements über der zweiten Schicht (14;37) und
b5) Falten der ersten (11;32) und der zweiten Schichten (14;37) über das wenigstens eine die Flügel (6) ausbildende Element.

33. Verfahren nach einem der Ansprüche 25 bis 30, **dadurch gekennzeichnet, dass** der Schritt b) die folgenden Unterschritte umfasst:
b1) Anordnen einer ersten (11;32) und einer zweiten Schicht (12;33-36) aus wenigstens einer Lage in ein Polymermaterial eingebetteter Strukturfasern in der Form (100,100a),
b2) Anordnen des die Kammer (50;50a-50d) ausbildenden Elements über den ersten (11;32) und zweiten Schichten (12;33-36),
b3) Falten der zweiten Schicht (12) über das die Kammer (50;50a-50d) ausbildende Element,
b4) Anordnen einer dritten Schicht (14;37) aus wenigstens einem Band aus in ein Polymermaterial eingebetteten Strukturfasern über der umgefaltenen zweiten Schicht (12;33-36),
b5) Anordnen des wenigstens einen die Flügel (6) ausbildenden Elements über der zweiten Schicht (12;33-36),
b6) Falten der ersten (11;32) und dritten Schichten (12;37) über das wenigstens eine die Flügel (6) ausbildende Element.

34. Verfahren nach einem Ansprüche 25 bis 33, **dadurch gekennzeichnet, dass** der Schritt b) weiterhin den Unterschritt des Anordnens einer zusätzlichen Schicht (15) aus in ein Polymermaterial eingebetteten Strukturfasern in einer Speichenbefestigungszone der Fahrradfelge (1,1 a).

35. Verfahren nach einem der Ansprüche 25 bis 34, **dadurch gekennzeichnet, dass** die Strukturfasern, die die Bänder bilden, gewebt sind, wobei die Schuss- und Kett-Richtungen am besten einen Winkel von 45° mit der Umfangsrichtung bilden.

## Revendications

1. Jante de bicyclette (1, 1a) en matériau composite à base de fibres de structure incorporées dans un matériau polymère, comprenant au moins un élément de renforcement circonférentiel (16-16g) à base de fibres de structure unidirectionnelles (20, 20') s'étendant à une intersection respective des parois de la jante, la direction des fibres de structure étant circonférentielle, **caractérisée en ce que** lesdites fibres de structure unidirectionnelles (20, 20') dudit au moins un élément de renforcement circonférentiel (16-16g) sont incrustées dans une substance d'encollage (21).

2. Jante de bicyclette selon la revendication 1, **caractérisée en ce que** ladite substance d'encollage (21) présente un allongement à la rupture avec un indice de rupture supérieur à celui du matériau polymère.

3. Jante de bicyclette selon la revendication 1 ou 2, **caractérisée en ce que** ladite substance d'encollage (21) présente une résistance au cisaillement intralaminaire supérieure à celle du matériau polymère.

4. Jante de bicyclette selon l'une des revendications précédentes, **caractérisée en ce que** les fibres de structure unidirectionnelles (20, 20') dudit au moins un élément de renforcement (16-16g) sont incorporées dans un matériau polymère.

5. Jante de bicyclette selon la revendication 4, **caractérisée en ce que** le matériau polymère dudit au moins un élément de renforcement circonférentiel (16-16g) a la même composition que le matériau polymère de la jante.

6. Jante de bicyclette selon l'une des revendications précédentes, **caractérisée en ce que** ledit au moins un élément de renforcement circonférentiel (16-16g) est obtenu à partir d'une bande de fibres unidirectionnelles (20) incorporées dans un matériau polymère enroulé en spirale autour d'un axe parallèle à la direction des fibres de structure et recouvert d'un film de substance d'encollage (21), soumis à un cycle de moulage avec déformation dans la section transversale.

7. Jante de bicyclette selon l'une des revendications précédentes, **caractérisée en ce que** ledit au moins un élément de renforcement circonférentiel (16-16g) est obtenu à partir d'une bande de fibres unidirectionnelles (20) incorporées dans un matériau polymère enroulé en spirale, conjointement à un film de substance d'encollage (21), autour d'un axe parallèle à la direction des fibres de structure, soumis à un cycle de moulage avec déformation dans la section transversale.

8. Jante de bicyclette selon l'une des revendications précédentes, **caractérisée en ce que** ledit au moins un élément de renforcement circonférentiel (16-16g) est obtenu à partir d'une bande de fibres unidirectionnelles lâches (20') imprégnées de matériau polymère, recouvert d'un film de substance d'encollage (21), soumis à un cycle de moulage avec déformation dans la section transversale.

9. Jante de bicyclette selon l'une des revendications précédentes, **caractérisée en ce qu'**au moins un élément de renforcement circonférentiel (16-16f) est fourni au niveau d'une intersection en T des parois de la jante et présente une section transversale essentiellement triangulaire.

10. Jante de bicyclette selon l'une des revendications précédentes, **caractérisée en ce qu'**au moins un élément de renforcement circonférentiel (16g) est fourni au niveau d'une intersection en croix des parois de la jante et présente une section transversale essentiellement rhomboïde.

11. Jante de bicyclette selon l'une des revendications précédentes, **caractérisée en ce que** ledit au moins un élément de renforcement circonférentiel (16-16g) comprend en outre un moyen de confinement (22) des fibres de structure unidirectionnelles (20, 20') s'étendant de façon discontinue sur la surface externe de celui-ci.

12. Jante de bicyclette selon la revendication 11, **caractérisée en ce que** ledit moyen de confinement (22) comprend une pluralité de fibres de structure unidirectionnelles, de préférence sèches, enroulées de façon hélicoïdale extérieurement.

13. Jante de bicyclette selon l'une des revendications précédentes, **caractérisée en ce que** ledit au moins un élément de renforcement circonférentiel (16-16g) comprend au moins une, de préférence au moins deux et de manière davantage préférée quatre parties (17), chacune s'étendant en un arc circonférentiel.

14. Jante de bicyclette selon la revendication 13, **caractérisée en ce que** des extrémités adjacentes (17c) de ladite au moins une partie (17) sont tronconiques, de préférence frusto-coniques et légèrement en recouvrement.

15. Jante de bicyclette selon l'une des revendications 13-14, **caractérisée en ce que** les extrémités (17c) de ladite au moins une partie (17) d'un premier élément de renforcement (16) sont disposées décalées circonférentiellement par rapport aux extrémités (17c) de ladite au moins une partie (17) d'un second élément de renforcement (16a).

16. Jante de bicyclette selon l'une quelconque des revendications précédentes, **caractérisée en ce que** ladite au moins une intersection des parois de la jante comprend au moins une intersection entre une paroi de pont supérieur (2), une paroi latérale d'une région de corps de la jante et une paroi d'aile de couplage de pneu (6).

17. Jante de bicyclette selon l'une quelconque des revendications précédentes, **caractérisée en ce qu'**elle comprend une première couche (11 ; 32) de matériau composite stratifié définissant la surface extérieure d'une région de corps de la jante et les ailes (6) de la jante, et au moins une deuxième couche (12) de matériau composite stratifié définissant la surface intérieure d'une chambre respective (50 ; 50a-50d) circonférentielle radialement interne essentiellement fermée.

18. Jante de bicyclette selon l'une quelconque des revendications 1 à 16, **caractérisée en ce qu'**elle comprend une première couche (11 ; 32) de matériau composite stratifié définissant la surface extérieure d'une région de corps de la jante et les ailes (6) de la jante, et une deuxième couche (14 ; 37) de matériau composite stratifié définissant la surface intérieure d'un canal de couplage de pneu (51).

19. Jante de bicyclette selon l'une quelconque des revendications 1 à 16, **caractérisée en ce qu'**elle comprend une première couche (11 ; 32) de matériau composite stratifié définissant la surface extérieure d'une région de corps et les ailes (6) de la jante, une deuxième couche (14 ; 37) de matériau composite définissant la surface intérieure d'un canal de couplage de pneu (51), et au moins une troisième couche (12 ; 33-36) de matériau composite stratifié définissant la surface intérieure d'une chambre respective (50 ; 50a-50d) circonférentielle radialement interne essentiellement fermée.

20. Jante de bicyclette selon l'une quelconque des revendications 17 à 19, **caractérisée en ce qu'**elle comprend en outre une couche supplémentaire (15) de matériau composite, disposée au niveau d'une zone de fixation de rayon de roue.

21. Jante de bicyclette selon l'une quelconque des revendications 17 à 20, **caractérisée en ce que** lesdites fibres de structure dudit matériau composite stratifié sont tissées, les directions de trame et de chaîne formant de manière davantage préférée un angle de 45° avec la direction circonférentielle.

22. Jante de bicyclette selon l'une quelconque des revendications 17 à 20, **caractérisée en ce que** lesdites fibres de structure dudit matériau composite stratifié sont disposées de façon aléatoire à l'intérieur dudit matériau polymère.

23. Jante de bicyclette selon l'une quelconque des revendications précédentes, **caractérisée en ce que** lesdites fibres de structure sont choisies dans le groupe comprenant des fibres de carbone, des fibres de verre, des fibres de bore, des fibres aramides, des fibres céramiques et des combinaisons de celles-ci, les fibres de carbone étant préférées.

24. Jante de bicyclette selon l'une quelconque des revendications précédentes, **caractérisée en ce que** ledit matériau polymère est une résine thermodurcissable.

25. Procédé de fabrication d'une jante de bicyclette (1, 1 a) en matériau composite à base de fibres de structure incorporées dans un matériau polymère, comprenant les étapes suivantes :
a) fourniture d'un moule (100, 100a) façonné selon un profil externe d'une jante de bicyclette (1, 1a), au moins un élément pour former une chambre respective (50 ; 50a-50d) circonférentielle radialement interne et au moins un élément pour former des ailes de couplage de pneu (6),
b) arrangement d'un matériau composite comprenant des fibres de structure incorporées dans un matériau polymère dans le moule (100, 100a) sur ledit au moins un élément de formation de la chambre (50 ; 50a-50d), et partiellement sur ledit au moins un élément de formation des ailes (6),
c) exposition du moule (100, 100a), dudit au moins un élément de formation de la chambre (50 ; 50a-50d) et dudit au moins un élément de formation des ailes (6) à un profil de pression et de température de façon à provoquer la polymérisation du matériau polymère,
d) retrait de la jante de bicyclette (1, 1a) moulée hors du moule (100, 100a) et dudit au moins un élément de formation des ailes (6) hors de la jante de bicyclette moulée (1, 1a),
e) fourniture d'au moins un élément de renforcement (16-16g) à base de fibres de structure unidirectionnelles (20, 20'),
f) arrangement dudit au moins un élément de renforcement (16-16g) circonférentiellement à une intersection des parois de la jante de bicyclette (1, 1a) à mouler, **caractérisé par** les étapes suivantes :
g) incorporation desdites fibres de structure unidirectionnelles (20, 20') dudit au moins un élément de renforcement circonférentiel (16-16g) dans une substance d'encollage (21).

26. Procédé selon la revendication 25, **caractérisé en ce que** ladite étape e) comprend les sous-étapes suivantes :
e1) fourniture d'une bande de fibres de structure unidirectionnelles (20, 20') incorporées dans un matériau polymère,
e2) enroulement en spirale de ladite bande sur elle-même autour d'un axe parallèle à la direction des fibres de structure (20, 20').

27. Procédé selon la revendication 26, **caractérisé en ce que** lesdites étapes g) et e) comprennent :
e3) l'association d'un film de substance d'encollage (21) à ladite bande.

28. Procédé selon la revendication 26 ou 27, **caractérisé en ce que** ladite étape e) comprend en outre la sous-étape suivante :
e4) l'enroulement du moyen de confinement (22) de façon discontinue sur la surface externe dudit élément de renforcement (16-16g).

29. Procédé selon l'une quelconque des revendications 25 à 28, **caractérisé en ce que** ladite étape f) comprend l'arrangement d'au moins une partie (17) dudit élément de renforcement (16-16g) circonférentiellement au niveau d'au moins une intersection des parois de la jante de bicyclette (1, 1 a) à mouler, le chevauchement partiel des extrémités (17c) de ladite au moins une partie par les extrémités (17c) de ladite au moins une partie adjacente (17).

30. Procédé selon l'une quelconque des revendications 25 à 29, **caractérisé en ce que** ladite étape f) comprend l'arrangement d'au moins une partie (17) dudit élément de renforcement (16-16g) circonférentiellement au niveau d'au moins deux intersections des parois de la jante de bicyclette à mouler, la position des extrémités adjacentes (17c) de ladite au moins une partie (17) au niveau d'une première intersection des parois étant décalée par rapport à la position des extrémités adjacentes (17c) de ladite au moins une partie (17) au niveau d'une seconde intersection des parois.

31. Procédé selon l'une quelconque des revendications 25 à 30, **caractérisé en ce que** ladite étape b) comprend les sous-étapes suivantes :
b1) l'arrangement d'une première couche (11 ; 32) et d'une deuxième couches (12 ; 33-36) d'au moins une couche de fibres de structure incorporées dans un matériau polymère dans le moule (100, 100a),
b2) l'arrangement dudit élément de formation de la chambre (50 ; 50a-50d) sur lesdites première (11 ; 32) et deuxième couches (12 ; 33-36),
b3) le pliage de ladite deuxième couche (12 ; 33-36) sur ledit élément de formation de la chambre (50 ; 50a-50d),
b4) l'arrangement dudit au moins un élément de formation des ailes (6) sur ladite deuxième couche (12 ; 33-36) et
b5) le pliage de ladite première couche (11 ; 32) sur ledit au moins un élément de formation des ailes (6),

32. Procédé selon l'une quelconque des revendications 25 à 30, **caractérisé en ce que** ladite étape b) comprend les sous-étapes suivantes :
b1) l'arrangement d'une première (11 ; 32) d'au moins une couche de fibres de structure incorporées dans un matériau polymère dans le moule (100, 100a),
b2) l'arrangement dudit élément de formation de la chambre (50 ; 50a-50d) sur ladite première couche (11 ; 32),
b3) l'arrangement d'une deuxième couche (14 ; 37) d'au moins une couche de fibres de structure incorporées dans un matériau polymère sur ledit élément de formation de la chambre (50 ; 50a-50d),
b4) l'arrangement dudit au moins un élément de formation des ailes (6) sur ladite deuxième couche (14 ; 37) et
b5) le pliage desdites première (11 ; 32) et deuxième couches (14 ; 37) sur ledit au moins un élément de formation des ailes (6).

33. Procédé selon l'une quelconque des revendications 25 à 30, **caractérisé en ce que** ladite étape b) comprend les sous-étapes suivantes :
b1) l'arrangement d'une première (11 ; 32) et d'une deuxième couches (12 ; 33-36) d'au moins une couche de fibres de structure incorporées dans un matériau polymère dans le moule (100, 100a),
b2) l'arrangement dudit élément de formation de la chambre (50 ; 50a-50d) sur lesdites première (11 ; 32) et deuxième couches (12 ; 33-36),
b3) le pliage de ladite deuxième couche (12) sur ledit élément de formation de la chambre (50 ; 50a-50d),
b4) l'arrangement d'une troisième couche (14 ; 37) d'au moins une couche de fibres de structure incorporées dans un matériau polymère sur ladite deuxième couche pliée (12 ; 33-36) et
b5) l'arrangement dudit au moins un élément de formation des ailes (6) sur ladite deuxième couche (12 ; 33-36),
b6) le pliage desdites première (11 ; 32) et troisième couches (12 ; 37) sur ledit au moins un élément de formation des ailes (6).

34. Procédé selon l'une quelconque des revendications 25-33, **caractérisé en ce que** ladite étape b) comprend en outre la sous-étape d'arrangement d'une couche supplémentaire (15) de fibres de structure incorporées dans un matériau polymère au niveau d'une zone de fixation de rayon de roue de la jante de bicyclette (1, 1a).

35. Procédé selon l'une quelconque des revendications 25 à 34, **caractérisé en ce que** lesdites fibres de structure formant lesdites couches sont tissées, les directions de trame et de chaîne formant de manière davantage préférée un angle de 45° avec la direction circonférentielle.
